(19)

Europäisches Patentamt
European Patent Office
Office européen des brevets

(11) **EP 4 358 020 A1**

(12) **EUROPEAN PATENT APPLICATION**

(43) Date of publication:
**24.04.2024 Bulletin 2024/17**

(21) Application number: **22201884.8**

(22) Date of filing: **17.10.2022**

(51) International Patent Classification (IPC):
***G06T 7/00*** *(2017.01)*

(52) Cooperative Patent Classification (CPC):
**G06T 7/001;** G06T 2207/20084; G06T 2207/30141

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Fitech sp. z o.o.**
**34-200 Sucha Beskidzka (PL)**

(72) Inventors:
- **Katucki, Grzegorz**
  **Kraków (PL)**
- **Jabtczyk, Damian**
  **Kraków (PL)**
- **Pótchtopek, Wojciech**
  **Kraków (PL)**
- **Rzepka, Dominik**
  **Kraków (PL)**

(74) Representative: **AOMB Polska Sp. z.o.o.**
**ul. Rondo Ignacego Daszynskiego 1**
**00-843 Warsaw (PL)**

(54) **METHOD OF DETECTING ERRORS IN THE PLACEMENT OF ELEMENTS IN THE PCB**

(57)    The invention provides a method for detecting mounting errors of elements on a PCB, carried out with the use of a computer, comprising the steps of:
a) providing an image of a PCB and an image of a reference PCB to an error detection module,
b) detecting, in the error detection module, with the use of artificial intelligence algorithms, of errors in mounting of elements in the image of the PCB,
c) indicating the mounting errors.

Fig. 1

EP 4 358 020 A1

Processed by Luminess, 75001 PARIS (FR)

**Description**

**Field of the Invention**

The invention provides a method for detecting errors in mounting of elements on a PCB (Printed Circuit Board), via optic inspection of the board with the use of artificial intelligence algorithms.

**Prior Art**

In prior art methods are known for detecting defects on a PCB. Nevertheless, not always such methods are fully automated, or they are very complicated.

Document CN 111882547 A teaches a method for detecting defects on a PCB based on a neural network. First an RGB image is obtained by means of a network camera, the image of the PCB is converted into a binary image with the use of a greyness threshold and then it is compared with a template PCB image in order to identify deferring items. Identification of qualities is performed on all the objects within the selected image, and main identification of relevant qualities includes: area, perimeter, tightness. This method differs from the subject solution in that it is used as a method for converting an image into a binary image.

Document CN 113192068 A teaches a system for AI visual control used for a printed circuit board. The AI visual control system consists of a module of acquisition and processing data of a front-end type, a module of identification of edges, and an artificial intelligence cloud platform, the module of acquisition and processing data of a front-end type including an AOI system; the module of identification of edges comprising an intelligent PCB detection model and a visual application structure; and the artificial intelligence cloud platform comprises a training module of an artificial intelligence model. The solution proposed in document CN 113192068 A discloses an advanced system for visual inspection, and this is why the disclosed method is more complicated and configuration takes more time, and thus it is not suitable for small batches.

On the other hand, document WO 2017088552 A1 discloses a method and a system for identification of polarization direction of an electronic element. The method includes obtaining an image comprising an electronic component. In the method an interleaved neural network is used, by means of which the polarization directions of the electronic elements may be identified automatically and precisely; this method is not aimed at any specific structure of electronic elements, but it is suitable for all kinds of electronic elements having a polarization and this identification is implemented with regard to polarization among categories of electronic elements. Thus solution discloses features that are similar as in the solution proposed by the Mandator. The method disclosed in this document does not indicate mounting errors but it indicates polarization of a component.

**Summary of the Invention**

It is the aim of this invention to provide a method for fast and easy detection of errors of element mounting in a PCB, and as a consequence it will be possible to indicate and isolate erroneously mounted boards. This will prevent use of defective boards as components in further manufacturing of devices in which they are used.

A method of detecting errors in the placement of elements in the PCB, carried out with the use of a computer, comprises the steps of:

a) providing an image of a PCB and an image of a reference PCB to an error detection module,

b) detecting, in the error detection module, with the use of artificial intelligence algorithms, of errors in element mounting in the image of the PCB,

c) indicating of the mounting errors.

Preferably, before step a) step a1) is carried out to generate, with the use of a camera, of an image of a PCB.

Preferably, the error detection module verifies correctness of mounting through verification of at least one of the following: LED illumination, mounting of a correct element, in particular a LED with a proper illumination colour, mounting of all the elements on a PCB, correct orientation, polarization, in particular rotation of the element, correctness of text or graphics code readouts, in particular for a board or an element; determining absence of elements other than electronic elements, determining correct mounting of a PCB in a station, determining correct mounting variant on a PCB.

Preferably, in verification of at least one quality, at least one subject to separate learning artificial intelligence algorithm is used, preferably the artificial algorithm being based on a neural network.

Preferably, the error detection module based on an artificial intelligence algorithm learns to detect errors in a database comprising images of elements correctly and erroneously mounted on a PCB.

Preferably, indication of mounting errors in step c) is carried out by generating of an image a PCB with marked frames showing regions with detected errors.

Preferably, in step b), a dedicated artificial intelligence algorithm, that learned indication of errors of a PCB, based on a series of earlier images of sample PCBs, detects mounting errors on a PCB.

Preferably, in step b), the error detection module compares an image of a reference PCB with the image of the PCB, and the individual regions comprising a single element are analysed, and before step b) step b1) is carried out consisting on separation from the image of the PCB of regions that comprise the individual element, and step b) is preferably carried out with the use of a Siamese neural network.

Preferably, in step b) the error detection module compares an image of a reference PCB with the image of the PCB, and an image obtained from combination into one image of the images of the reference PCB and the image of the PCB is analysed, where individual regions comprising a single element are analysed, and before step b) step b1) is carried out consisting on separation from the image of the PCB of regions that comprise the singular element, and step b) is preferably carried out with the use of a modified Siamese neural network in which input images are combined and provided at the input as one image.

Preferably, the method is implemented in at least two stages of the PCB assembling.

Preferably, detection of a mounting error on a PCB triggers an alert.

Preferably, before step a, information concerning a new mounting on a PCB is introduced according to the following steps:

a31) providing an image of a reference PCB,

a32) marking of frames comprising elements to be verified,

a33) executing a number of tests to check whether the network operates correctly.

Preferably, at least one step is carried out on a server, and more preferably, the obtained data are stored in a server.

Another aspect of the invention provides a computer program comprising software to execute the method of the invention.

A computer readable data storage characterized in that it comprises a program of the invention.

**Advantageous Effects of the Invention**

As a result of the use of the inventive method it is possible to detect defects in mounting in a PCB at an early stage, for example, before soldering, when any possible errors can be easily eliminated. Final product mat be also verified, before a PCB is mounted into a device in a further process. This provides a higher quality of processing, because final products are almost free of boards with defects. Moreover, the process is automated and for detection of mounting errors artificial intelligence algorithms are used and not the human eye. As a result the process is also less expensive and more reliable.

The solution described here focuses at some mounting errors in PCBs, because it has been observed that the basic errors, such as absence of an element or improper polarization, cause a considerable majority of errors encountered in manufacturing. Detection of such errors may be carried out relatively quickly and easily, and it contributes to a considerable quality improvement.

**Brief Description of the Drawings**

The invention will be nor presented in a preferable embodiment with reference to the attached drawings where:

Fig. 1 shows an image of a mounted board with a defect being a non-mounted diode.

Fig. 2 shows a reference image and an image of a mounted board with the indication of the regions of mounting and an incorrectly mounted element.

**Detailed Description of Preferable Embodiments of the Invention**

A method for detecting mounting of elements on a PCB, according to a preferable embodiment, is carried out with the use of a computer. It comprises several steps.

In the first step a) of inspection, the image of the PCB and the reference PCB image are provided to the error detection module. Ready for inspection, mounted PCBs are introduced into a device equipped in an embodiment of the invention with a housing, conveyor, illuminators and at least one camera. Preferably, the boards are positioned on the conveyor that transports a board to the place where a camera captures an image of its mounting, but a person skilled in the art, using his/her elementary knowledge, would be able to find many other ways to position the board at the place where image is captured.

Next, in step b), in the error detection module, with the use of artificial intelligence algorithms, errors in mounting of elements are detected in the image of the PCB. The error detection module compares, with the use of artificial intelligence algorithms, the image obtained via a camera with the image of a template. The alert is understood as, for example, communicating error information or an alert that communicates an irregularity. As a result the defective board may be quickly rejected from further processing and this will make it possible to save time and money and to eliminate risk of inserting erroneously mounted boards as an element into further electric devices. A person skilled in the art will be aware that it may be necessary to perform additional operations on the obtained image. For example, it may be necessary to indicate the position where in the image the PCB being analysed is positioned or graphic transformations resulting from the characteristics of the optics used for capturing the photograph, etc.

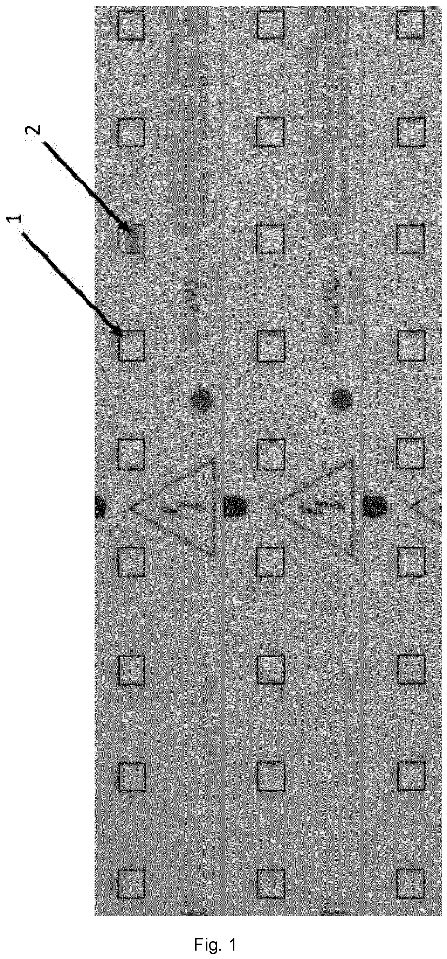

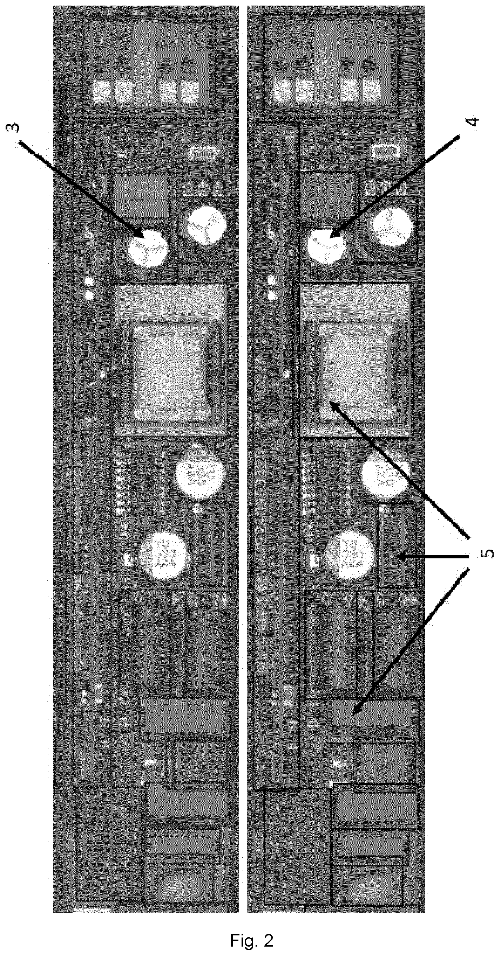

The last inspection step c) consists on indication of mounting errors on the board, as shown in a preferable embodiment, through generation of an image of the PCB with marked frames showing regions of the detected error. As a result, the operator of the device, in an easy and fast way may see where the defect is positioned. Moreover, inspection, unlike other methods used so far, is more accurate. It indicates even the smallest regions and all the elements that differ from the reference image. The image thus presented, with indication of the mounting regions and comparison with the template board, is shown in Fig. 1 and Fig. 2. The first frame 1 shows a correctly mounted LED, while a second frame 2 shows the place where a diode is missing - no diode has been mounted. Frames 5 show mounting regions in a form of marker portions corresponding to a given element. It is also possible to see the correctly mounted element 3 and the erroneously mounted element 4 with an opposite, incorrect polarization. If the algorithm does not detect error and a board is correctly mounted, the board travels to a further production step. If the artificial intelligence algorithm detects an error, it is shown in the monitor screen and the device, in a preferable embodiment, triggers an alert.

Preferably, before step a) step a1) is carried out to generate, with the use of a camera, an n image of a PCB. According to a preferable embodiment, a computer is correlated with a camera that before initiation of the error detection process generates an image of a correctly mounted PCB.

An error detection module verifies correctness of mounting via verification of at least two qualities. It is capable of detecting whether a LED is on and whether it emits light of the proper colour. It also verifies whether a given element is correctly mounted on the board and whether its orientation, meant as displacement and rotation, with relation to a template position, is correct. This enables polarization control, in particular of whether a given element is not rotated, and verifies correctness of readout of test or graphic codes, in particular for the board or element. It is also possible to determine whether all the elements are mounted on a PCB - i.e., whether any necessary element is missing, and to determine absence of elements apart from the electronic elements. Additionally, due to the use of the method of the invention it is also possible to determine correct positioning of a PC on a station and correct mounting variety on a PCB.

Due to the possibility of examining such many elements in one step, the board being inspected does not require any further inspection, since the most frequent errors are detected in one step. This improves the velocity and accuracy of inspection.

For verification of each of the qualities at least one, separately learned artificial intelligence algorithm is used. Preferably, the artificial intelligence algorithm is based on a neural network. The error detection module based on an artificial intelligence algorithm learns to detect errors on a data base comprising images of elements correctly and incorrectly mounted on a PCB. Such dedicated artificial intelligence algorithm that learned detecting errors of the PCB, based on an earlier series of images of sample PCBs, detects errors in the image of the PCB. Due to the use of a separate artificial intelligence algorithm for verification of each quality it is possible to introduce further new elements to be verified, and the system may then compare numerous different elements at the same time, and the suitable algorithm will be executed for the corresponding feature.

Algorithms for comparing colours are used to decide whether the colour of a component in the photograph is similar to the colour of the component on the reference photograph. Algorithms receive definition of similar colours based on exemplary pairs of similar and dissimilar components.

At the input the algorithm receives two photographs of components (a reference one and a test one) and a set of parameters, at the output it should provide a binary verdict whether the colours are similar or not.

According to one preferable embodiment, the algorithm operates according to the following steps: in one step conversion is carried out of both photographs to HSL colour space (hue, saturation, lightness). A second step comprises calculating histograms from the hue layer according to the present number of intervals in the histogram (algorithm parameter) for the reference photograph and the test photograph. Two vectors are obtained each having the same number of intervals in the histogram. These vectors may be understood as distribution of colours in the photograph. In the third step normalization is carried out for both vectors according to norm L2, and the calculating a scalar product - since vectors are normalized, and we obtain a cosine distance. Finally, a check is carried out whether the calculated value is smaller than a threshold (algorithm parameter) - if so, the algorithm returns a verdict DIFFERENT, otherwise a verdict SIMILAR. Optimum threshold is calculated based on earlier test examples.

According to another preferable embodiment of the invention, the algorithm operates according to the following steps: in the first step adjustment of the test photograph dimensions to the dimensions of the reference photograph is carried out. A second step is division of the two photographs into n*m equal rectangles (n, m - algorithm parameters). In the third step, for each rectangle from the reference photograph and the corresponding test photograph:

    a. Calculating an average colour (for each layer separately)

    b. Calculating the distance between such average colours via Delta E CIE 2000 metric

    c. Verifying whether the distance is greater than a threshold value (algorithm parameter) and memorizing

The final step is calculating the proportion of portions for which the distance from the reference portions did not exceed the threshold value - if it is greater than threshold_sim (algorithm parameter), then the algorithm returns a verdict SIMILAR, otherwise a verdict DIFFERENT.

According to a preferable embodiment, preferably, the error detection module based on an artificial intelligence algorithm learns to detect errors on a database comprising images of elements that are correctly and erroneously mounted on a PCB. Due to this, the neural network is capable of distinguishing between a correctly mounted element and an erroneously mounted element, by means of a capability of recognizing correctly and erroneously mounted elements.

According to a preferable embodiment, in step b) the dedicated artificial intelligence algorithm that learned detecting errors of a PCB, based on an earlier series of images of sample PCBs, detects errors in the image of the PCB. The series of sample analyses results in a high accuracy of the process.

According to a preferable embodiment, in step b) the error detection module compares the image of a reference PCB to the image of the PCB. Individual regions comprising a single element are analysed, and before step b) step b1) is carried out consisting on separation from the image of the PCB of regions that comprise the singular element, e.g., via a "keypoint matching" algorithm commonly known in the prior art. Preferably, step b) is carried out with the use of a Siamese neural network.

According to a preferable embodiment, in step b) the error detection module compares the image of a reference PCB with the image of the PCB. The image resulting from combination into one image of the images of a reference PCB with the image of the PCB is analysed. Individual regions comprising a single element are analysed. Before step b) step b1) is carried out consisting on separation from the image of the PCB of regions that comprise the singular element. Preferably, step b) is carried out with the use of a Siamese neural network.

A modified Siamese network is intended to compare the image of the element being tested to the reference one, in order to decide on their conformity. Input images are combined and provided at the input of the network as one image which enhances productivity of comparison of the images. Possible methods for combining images:

- positioning of the contents of one aside the another one, and this forms an image of a height of the input image and of a width of a double the width the input image

- generating an image of a doubled number of layers comprising respective colour channels (e.g., RGB) and positioning of the test image on the basic set of layers and of the reference image on an additional set of layers (this is known in the literature as 2-channel, joint-data input/input stacking, early merge)

- Input images obtained are processed with the use of a neural network (e.g., by means of ResNet network) consisting of at least one convolution/interlacing layer, upon which activation function is executed and at least one *fully-connected* (FC) layer

- The FC layer has four outputs, two ($s_0$, $s_1$) of which being Siamese ones, and two ($c_0$, $c_1$) being classification ones

- Decision on similarity of the conformity between the element being tested and the reference one is collected from the classification outputs

- Network learning is carried out with the use of backpropagation based on a cost function $\mathcal{L}(s_0, s_1, c_0, c_1, Y)$,

operating on the outputs $s_0$, $s_1$, $c_0$, $c_1$ of the neural network and $Y$ label to define similarity ($Y = 1$) or dissimilarity ($Y = 0$) of the input images.

- Cost function $\mathcal{L}(s_0, s_1, c_0, c_1, Y)$ is weighted with the use of the $\alpha$ parameter and a sum

    ○ modified contrastive function (*contrastive loss*) parameterized with a margin m and calculated on the absolute difference between the Siamese outputs (unlike the conventionally used Euclidean distance between the outputs),

    ○ binary cross-entropy, calculated at the classification outputs subject to normalization by means of a *softmax* function:

$$\mathcal{L}_\alpha(s_0, s_1, c_0, c_1, Y) = \alpha \cdot \text{Contrastive}_m(s_0, s_1, Y) + (1 - \alpha) \cdot \text{Crossentropy}(c_0, c_1, Y)$$

$$\text{Contrastive}_m(s_0, s_1, Y) = Y \cdot |s_0 - s_1| + (1 - Y) \max(0, m - |s_0 - s_1|)$$

$$p(Y) = \text{Softmax}(c_0, c_1) = \frac{e^{c_1}}{e^{c_0} + e^{c_1}}$$

$$\text{Crossentropy}(c_0, c_1, Y) = Y \cdot \log p(Y) + (1 - Y) \cdot \log(1 - p(Y))$$

According to another preferable embodiment of the invention, for each new kind of a board and for each new mounting on a PCB, information is introduced according to several steps. In step a31), the image of the reference PCB is introduced. In step a32), frames are marked that comprise elements to be verified. Finally, in step a33), a series of check tests are carried out to check whether a given network operates properly. Due to this, based on numerous measurements, of both correct and erroneous mountings, neural network is able to recognize errors and defects of mounting on each board, because in one of the preferable embodiments for each kind of boards a new artificial intelligence algorithm is generated. When a new product is already introduced into the system, the actual inspection is carried out. Ready for inspection mounted PCBs are introduced into the device.

Preferably, before step a31 the generalized neural network learns and then it is used in such defining of the configuration of a given board. First, positioning of the photograph to obtain an image in a suitable position is carried out. The images are collected with both positive and negative cases of mounting. Positive cases of mounting are without defects at the time of obtaining of proper mounting. Negative cases of mounting are indicated when there is a defect in mounting. Next, in a further step, the artificial intelligence algorithm learns, on numerous examples of a PCB, and thereafter the level of conformity with the reference is verified.

Preferably, the method according to a preferable embodiment of the invention is executed on at least two stages of assembling of a PCB. This causes that it is possible to detect errors at different stages of manufacturing.

Preferably, at least one step of inspection of PCBs is carried out on a server, and the obtained data are saved in the server. This prevents loss of data in the case of a failure of the device in the production line and improves the process where numerous local stations may transmit data to be analysed to one server.

A person skilled in the art will be aware that the presented method may be carried out in a form of a computer program that comprises software to execute the method according to the invention. Such a computer program product in a form ready for execution or in a form ready for installation or compilation may be stored on a computer readable data storage such as a hard disc drive, USB memory or a CD. A person skilled in the art will be aware that other methods for storing data may be used.

**Claims**

1. A method of detecting errors in the placement ofelements in the PCB, carried out with the use of a computer, comprising the steps of:

    a) providing an image of a PCB and an image of a reference PCB to an error detection module,

b) detecting, in the error detection module with the use of artificial intelligence algorithms, errors in elements mounting in the image of the PCB,

c) indicating the mounting errors.

**2.** Method according to claim 1, **characterized in that** before step a) step a1) is carried out to generate, with the use of a camera, of an image of the PCB.

**3.** Method according to claims 1 or 2, **characterized in that** the error detection module verifies mounting correctness via verification of at least one quality of the list: lighting of a LED, mounting of a correct element, in particular a LED with correct light colour, mounting of all the elements on the PCB, correct orientation, polarization, in particular rotation, of the element, correctness of the readout of text or graphic codes, in particular of the board or element, determining absence of other elements than electronic elements, determining correct positioning of the PCB in the station, determining correct mounting variant on the PCB.

**4.** Method according to claim 3, **characterized in that** for verification of a quality at least one, separately learned artificial intelligence algorithm is used, preferably the artificial intelligence algorithm being based on a neural network.

**5.** Method according to any one of claims 1-4, **characterized in that** the error detection unit based on an artificial intelligence algorithm learns to detect errors on a database comprising images of elements correctly and erroneously mounted on a PCB.

**6.** Method according to any one of claims 1-5, **characterized in that** indication of mounting errors in step c) is carried out via generating an image of the PCB with marked frames to indicate regions with detected error.

**7.** Method according to any one of claims 1-6, **characterized in that** in step b) a dedicated artificial intelligence algorithm that learned to detect errors of a PCB, based on earlier series of images of sample PCBs, detects mounting errors on a PCB.

**8.** Method according to any one of claims 1-6, **characterized in that** in step b) the error detection module compares an image of a reference PCB to the image of the PCB, where individual regions comprising a single element are analysed, and before step b) step b1) is carried out consisting on separation from the image of the PCB of regions that comprise the singular element, and step b) is preferably carried out with the use of a Siamese neural network.

**9.** Method according to any one of claims 1-7, **characterized in that** in step b) the error detection module compares an image of a reference PCB with the image of the PCB, and an image obtained as a result of combination into one image of the image of the reference PCB and the image of the PCB is analysed, and the individual regions comprising a single element are analysed, where before step b) step b1) is carried out consisting on separation from the image of the PCB of regions comprising a singular element, and step b) is preferably carried out with the use of a modified Siamese neural network in which the input images are combined and provided at the input of the network as one image.

**10.** Method according to any one of claims 1-9, **characterized in that** the method is implemented in at least two stages of assembling of the PCB.

**11.** Method according to any one of claims 1-10, **characterized in that** detection of a mounting error on a PCB triggers an alert.

**12.** Method according to any one of claims 1-11, **characterized in that** before step information is introduced concerning new mounting on the PCB according to the following steps:

a31) introduction of an image of a reference PCB,

a32) marking of frames that comprise elements to be verified,

a33) carrying out check tests to check whether the network operates properly.

**13.** Method according to any one of claims 1-12, **characterized in that** at least one step is carried out on a server, and preferably data are stored on the server.

**14.** A computer program product, **characterized in that** it comprises software to execute the method defined in any one of claims 1-13.

**15.** A computer readable data storage, **characterized in that** it comprises program defined in claim 14.

Fig. 1

Fig. 2

Europäisches
Patentamt

European
Patent Office

Office européen
des brevets

# EUROPEAN SEARCH REPORT

**Application Number**

**EP 22 20 1884**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MUJEEB ABDUL ET AL: "One class based feature learning approach for defect detection using deep autoencoders", ADVANCED ENGINEERING INFORMATICS, ELSEVIER, AMSTERDAM, NL, vol. 42, 8 June 2019 (2019-06-08), XP085914974, ISSN: 1474-0346, DOI: 10.1016/J.AEI.2019.100933 [retrieved on 2019-06-08] * abstract * * page 1 – page 6 * * figures 2,3,7,11,14,15 * | 1-15 | INV. G06T7/00 |
| A | HUANG SZU-HAO ET AL: "Automated visual inspection in the semiconductor industry: A survey", COMPUTERS IN INDUSTRY, ELSEVIER, AMSTERDAM, NL, vol. 66, 22 November 2014 (2014-11-22), pages 1-10, XP029108502, ISSN: 0166-3615, DOI: 10.1016/J.COMPIND.2014.10.006 * the whole document * | 1-15 | |
| | | | **TECHNICAL FIELDS SEARCHED (IPC)** |
| | | | G06T |
| A | MOHD HANI AHMAD FADZIL ET AL: "A review of SMD-PCB defects and detection algorithms", FOURTH INTERNATIONAL CONFERENCE ON MACHINE VISION (ICMV 2011): COMPUTER VISION AND IMAGE ANALYSIS; PATTERN RECOGNITION AND BASIC TECHNOLOGIES, SPIE, 1000 20TH ST. BELLINGHAM WA 98225-6705 USA, vol. 8350, no. 1, 24 December 2011 (2011-12-24), pages 1-7, XP060001457, DOI: 10.1117/12.920531 [retrieved on 2012-01-12] * the whole document * | 1-15 | |

The present search report has been drawn up for all claims

| Place of search | Date of completion of the search | Examiner |
|---|---|---|
| Munich | 23 March 2023 | Millet, Christophe |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111882547 A
- CN 113192068 A
- WO 2017088552 A1